# EUROPÄISCHE PATENTANMELDUNG

(11) **EP 1 237 247 A1**
(43) Veröffentlichungstag der Anmeldung: **04.09.2002**
(21) Anmeldenummer: 02003356.9
(22) Anmeldetag: 13.02.2002
(51) Int. Cl.: H02G 3/32

(54) **Befestigungselement für Kabelbündel**

(30) Priorität: 19.02.2001 DE 20102935 U
(71) Anmelder: Hellermann Tyton GmbH, 25436 Tornesch (DE)
(72) Erfinder: Suck, Michael, 25462 Rellingen (DE)
(74) Vertreter: Glawe. Delfs. Moll

(57) **Zusammenfassung**

Befestigungselement für Kabelbündel und dergleichen langgestreckte Gegenstände, die mittels eines Schellenbands (7) zu binden sind. Das Befestigungselement weist eine Durchgangsöffnung (8) für das Schellenband (7) auf. Um das Schellenband im vormontierten Zustand innerhalb der Durchgangsöffnung (8) festzuhalten, ist der durch die Durchgangsöffnung (8) bestimmte Weg des Schellenbands (7) gekrümmt oder abgeknickt ausgebildet, wobei das Schellenband im entspannten Zustand etwa geradlinig vorausgesetzt wird.

Eine Halteeinrichtung, die aus einem Schellenband (7) und einem Befestigungselement (1) besteht, welches eine Durchgangsöffnung (8) zur Aufnahme des Schellenbands (7) aufweist, ist dadurch gekennzeichnet, daß der von der Durchgangsöffnung (8) bestimmte Weg des Schellenbands (7) von dem Verlauf des entspannten Schellenbands (7) derart abweicht, daß das Schellenband (7) in der Durchgangsöffnung (8) elastisch verformt wird.

## Beschreibung

Zum Befestigen von Kabelbündeln oder anderen langgestreckten Gegenständen an einer festen Struktur, beispielsweise einer Wand, verwendet man Schellenbänder in Verbindung mit einem Befestigungselement, das einerseits eine Durchgangsöffnung für das Schellenband und andererseits ein Halteorgan zur Verbindung mit der festen Struktur aufweist (DE-U-1 989 458; DE-U-295 10 606). Befestigungselemente dieser Art werden häufig mit einem zugehörigen Schellenband fabrikmäßig vormontiert. Das heißt, ein Schellenband, wie es als sogenannter Kabelbinder handelsüblich ist, wird in die Durchgangsöffnung eingesteckt und soll darin bis zur Verwendung sicher verbleiben. Wenn die Durchgangsöffnung einen weiteren Querschnitt als das Schellenband hat, besteht die Gefahr, daß es herausfällt und bei Verwendung nicht zu finden ist oder erst wieder eingesteckt werden muß. Es ist daher bekannt, die Durchgangsöffnung mit einer federnden Wand zu versehen, die elastisch auf das darin befindliche Schellenband drückt und es durch Reibung festhält. Jedoch ist die Fertigung eines solchen Befestigungselements verhältnismäßig aufwendig. Ferner ist es bekannt (DE-U-94 01 448), eine Öffnung in dem Band und einen darin eingreifenden Stift am Befestigungselement vorzusehen, was gleichfalls aufwendig und in der Verwendung umständlich ist.

Der Erfindung liegt die Aufgabe zugrunde, ein Befestigungselement zu schaffen, in dessen Durchgangsöffnung ein Schellenband trotz unaufwendiger Fertigung hinreichend sicher gehalten ist. Dies wird erfindungsgemäß durch die Merkmale des Anspruchs 1 oder des Anspruchs 3 sowie vorzugsweise die Merkmale der Unteransprüche erreicht.

Demgemäß ist vorgesehen, daß der von der Durchgangsöffnung bestimmte Weg des Schellenbands gekrümmt oder abgeknickt ausgebildet ist und ihr geradliniger Durchgangsquerschnitt geringer ist als der des zugehörigen Schellenbands. Das Schellenband, das hierbei geradlinig gestreckt vorausgesetzt wird, wird durch die Krümmung bzw. Abknickung der Durchgangsöffnung elastisch gebogen und erzeugt dadurch eine Reibkraft an der Öffnungswand, durch die es festgehalten wird. Allgemeiner gesprochen, weicht der von der Durchgangsöffnung bestimmte Weg des Schellenbands von dem Verlauf des entspannten Schellenbands derart ab, daß das Schellenband in der Durchgangsöffnung elastisch verformt wird. Da Schellenbänder im allgemeinen im entspannten Zustand gerade sind, läuft diese Regel auf die im vorstehenden Absatz erwähnte gekrümmte oder abgeknickte Ausbildung der Durchgangsöffnung hinaus. Jedoch ist auch denkbar, daß die Durchgangsöffnung gerade und das Schellenband im entspannten Zustand gekrümmt ist oder daß der von der Durchgangsöffnung bestimmte Weg abweichend von dem gekrümmten Verlauf des Schellenbands gekrümmt ist. Es ist nicht erforderlich, daß der Unterschied im Verlauf der Durchgangsöffnung und des Schellenbands für die gesamte Länge des Schellenbands zutrifft; vielmehr kann es ausreichen, wenn lediglich ein Teil des Schellenbands abweichend vom Verlauf der Durchgangsöffnung gekrümmt ist.

Die Erfindung wird im folgenden näher unter Bezugnahme auf die Zeichnung erläutert, die ein vorteilhaftes Ausführungsbeispiel veranschaulicht. Darin zeigen:
- Fig. 1: eine Draufsicht,
- Fig. 2 und 3: perspektivische Darstellungen des Halteelements mit und ohne Schellenband, und
- Fig. 4: einen Längsschnitt des Befestigungselements im vergrößerten Maßstab.

Das Befestigungselement 1 besteht aus einem Halteteil 2, der im dargestellten Beispiel aus einem Fuß 3, der in eine Wandbohrung einzustecken ist, und einem Halteteller 5 besteht, der sich auf die Oberfläche der Wand stützend auflegt. Der Fuß 3 ist mit widerhakenartig ausgebildeten, umlaufenden Rippen 4 versehen. Der Halteteil 2 kann beliebige andere Gestalt haben, je nach der Art und Weise, wie das Befestigungselement an einer es haltenden Struktur anzubringen ist.

Das Befestigungselement weist ferner einen Kopfteil 6 auf, der zur Verbindung mit dem als Kabelbinder 7 ausgebildeten Schellenband dient. Der Kopf 6 hat eine Durchgangsöffnung 8, durch die das Kabelband 7 hindurchgesteckt ist. Die die Durchgangsöffnung 8 auf der in der Zeichnung unteren Seite begrenzende Wand 9 verläuft auf dem größeren Teil ihrer Länge geradlinig und senkrecht zur Längsrichtung 10 des Befestigungselements. In ihrem rechten Endbereich 11 ist sie abweichend von dieser Richtung ein wenig hochgebogen. Die Abweichung von der Richtung des geradlinigen Verlaufs der Wand 9 beträgt im dargestellten Beispiel etwa die Hälfte der Weite der Durchgangsöffnung. Sie liegt zweckmäßigerweise im Bereich von 30 bis 70 % dieser Weite.

Oberseits wird die Durchgangsöffnung 8 durch einen Steg 13 begrenzt, der an der Bildung der Durchgangsöffnung 8 durch eine Wand 14 beteiligt ist. Diese Wand ist in Durchgangsrichtung kürzer als die Wand 9, so daß deren Erhebung 11, 12 außerhalb des von der Wand 14 abgedeckten Bereichs liegt. Das Kabelband 7, das man sich im entspannten Zustand gerade vorzustellen hat, wird durch die Erhebung 11, 12 auf seinem geraden Verlauf abgelenkt. Es wird ihm eine Biegung aufgezwungen, unter der er mit Vorspannung an den Wänden 9, 11, 14 anliegt und durch Reibung gegen unerwünschte Längsverschiebung gesichert wird. Dadurch, daß die Erhebung 11, 12 außerhalb des Bereichs der Wand 14 liegt, kann sich das Band frei nach oben wegbiegen.

Es wäre auch möglich, den Durchgangskanal innerhalb der Grenzen der Wand 14 mit einer Krümmung oder Abknickung zu versehen, nämlich unter der Voraussetzung, daß nicht nur die Wand 9, sondern auch die Wand 14 entsprechend gestaltet ist, um der erzwungenen Abbiegung des Bands 7 Ausweichraum zu geben.

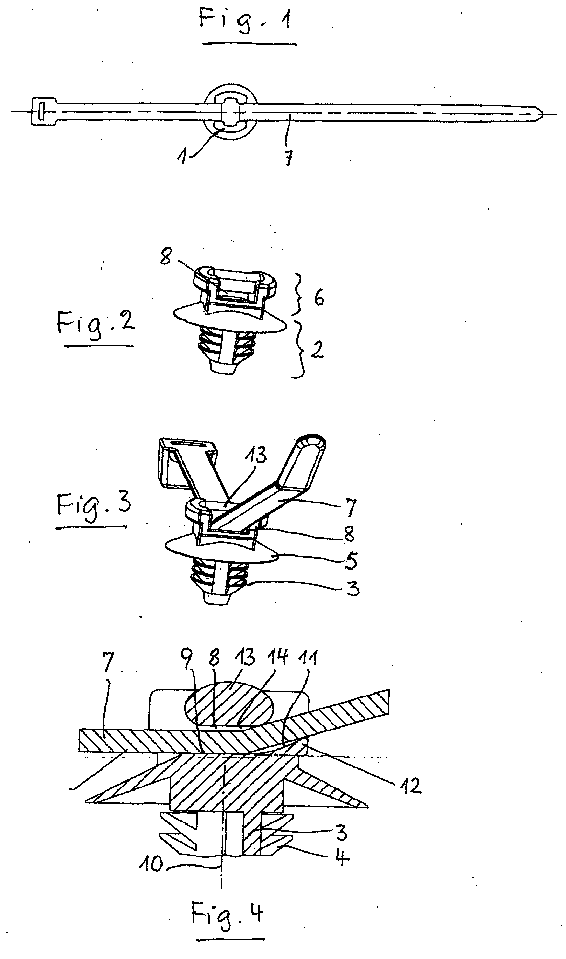

Wenn das Band 7 um einen zu haltenden Gegenstand, beispielsweise ein Kabelbündel, gespannt wird, dessen Richtung quer zur Zeichenebene der Figur 4 verläuft, wird das Band 7, je nach Durchmesser des Bündels, stärker gebogen, als es in der Zeichnung dargestellt und für die erläuterten Haltezwecke erforderlich ist. Das Band wird dann frei von der Erhebung 11, 12. Die Halte- und Bindefunktion des Bands 7 wird daher durch die Anwesenheit der Erhebung 11, 12 in keiner Weise berührt.

Der Kopf 6 des Befestigungselements ist leicht in Kunststoff formbar. Es besteht beispielsweise aus Polyamid, gegebenenfalls faserverstärkt.

## Patentansprüche

1. Befestigungselement für Kabelbündel und dergleichen langgestreckte Gegenstände, die mittels eines Schellenbands (7) zu binden sind, mit einer Durchgangsöffnung (8) für ein Schellenband (7), **dadurch gekennzeichnet, daß** der durch die Durchgangsöffnung (8) bestimmte Weg des Schellenbands (7) gekrümmt oder abgeknickt ausgebildet ist.

2. Befestigungselement nach Anspruch 1, **dadurch gekennzeichnet, daß** der Richtungssinn der Krümmung oder Abknickung dem Krümmungssinn eines dem zu haltenden Gegenstand umgelegten Schellenbands (7) entspricht.

3. Einrichtung zum Halten eines langgestreckten Gegenstands wie Kabelbündel, die ein Befestigungselement (1) mit einer Durchgangsöffnung (8) und ein zur Aufnahme in der Durchgangsöffnung (8) bestimmtes Schellenband (7) umfaßt, **dadurch gekennzeichnet, daß** der von der Durchgangsöffnung (8) bestimmte Weg des Schellenbands (7) von dem Verlauf des entspannten Schellenbands (7) derart abweicht, daß das Schellenband (7) in der Durchgangsöffnung (8) elastisch verformt wird.

4. Einrichtung nach Anspruch 3, **dadurch gekennzeichnet, daß** der von der Durchgangsöffnung (8) bestimmte Weg des Schellenbands (7) in der Ebene quer zu der vorgesehenen Richtung des Gegenstands gekrümmt oder abgeknickt ausgeführt ist.
